# EUROPEAN PATENT APPLICATION

(11) **EP 4 741 317 A1**
(43) Date of publication of application: **13.05.2026**
(21) Application number: 24212064.0
(22) Date of filing: 11.11.2024
(51) Int. Cl.: B65G 15/02, B65G 15/64, B65G 23/06

(54) **BELT CURVE**

(71) Applicant: Interroll Holding AG, 6592 Sant'Antonino (CH)
(72) Inventor: AVELAR, Fabian, Canon City, CO 81212 (US); HARDING, Tom, Canon City, CO 81212 (US); HARRELL, Michael, Canon City, CO 81212 (US); HARRISON, Scott, Canon City, CO 81212 (US)
(74) Representative: Kohlhof, Stephan

(57) **Abstract**

Curved conveyor belt (3),
the curved belt is in particular suitable for a belt curve (1), in particular the belt curve is adapted to convey an object along a curved conveying direction (C) in a conveying area (11) between a first end (E1) and a second end (E2), wherein the conveying direction (C) is perpendicular to a radial direction (R);
in particular the belt curve comprising:
- a supporting frame (2);
- a conveyor belt (3), which is arranged circumferentially on the support frame (2) and adapted to carry the object;
- at least one deflection roller (4) located at each of the first end (E1) and the second end (E2), the conveyor belt (3) is deflected around the deflection roller (4);
- a drive motor (4) adapted to provide a drive power for the conveyor belt (3);
- a guiding (64), in particular a guide rail, adapted to guide the conveyor belt (3) in the conveying direction (C), thereby providing a guiding force in radial outward

characterized by
a plurality of receptables (32) within the belt body (31),
the receptables (32) are adapted to be engaged by a drive sprocket (44).

## Description

The invention refers to a belt curve.

A belt curve is shown under https://www.voutube.com/watch?v=QokVhGOa!v)fU. This belt curve is in the following referred to as the "conventional belt curve". The belt is mechanically laced.

For adapting the tension of the conveyor belt the position of the deflection rollers at a first end and a second end can be amended. By increasing the distance between the rollers the tension is increased which is shown in the video between min 2:00 and min 2:05. The belt curve is used for conveying suitcases.

Another belt curve is disclosed in EP 2 276 685 B1 similar to the above conventional belt curve. A deflection roller is suspended in a frame. The deflection roller is displaceable in a direction of movement of the conveyor belt (conveying direction), in order to be able to tension the conveyor belt after it has been mounted (EP 2 276 685 B1, [0053]).

In the e-commerce industry also small items and so called soft packs are to be sorted and conveyed automatically. A parcel usually has a defined shape and a rigid surface, which makes it easy for automated handling. A soft pack is used for packaging soft content like clothes. The outer surface is are is made by a plastic sheet, so that the soft pack has a undefined shape and a slippery surface. Gaps between conveyors are the natural enemy of soft packs.

To optimize the reliability of conveyors in conveying of softpacks, the size of gaps in the conveying tracks needs to be minimized, in particular a gap to an adjacent conveyor. The topic of small gaps in relation to belt curves is in detail described in DE 20 2021 101 563 U1.

In the conventional belt curve, the position of the deflection rollers is amended for tensioning purposes. Consequently there the gap size is a variable value depending of the belt tension. Consequently the optimization capabilities in the conventional belt curve with respect to gaps are limited, since positioning the deflection roller in a manner to support the smallest gap is not possible.

There are different possibilities to drive the conveyor belt in a belt curve.

Positive drive: here a drive sprocket interacts with a drive chain, wherein the drive chain is fixedly connected to the conveyor belt. The advantage is, that the conveyor belt is driven a high precision, and there is not need for a high tension of the conveyor belt. Drive chain are usually quite noisy.

Friction drive: here a deflection roller interacts with the conveyor belt. The conveyor belt is held at a certain high tension around the deflection roller, so that a drive force us transmitted from the deflection roller to the conveyor belt. For purpose of uniform speed relation between the belt and the deflection roller, the deflection roller has a conical shape where the radial inward area of the deflection roller has a smaller diameter.

It is an object of the present invention to provide an improved belt curve, in particular in view of conveying soft packs and small items. In particular the belt curve should operate at a low noise level and the belt curve should drive in a positive manner.

This object is solved by a curved conveyor belt and a belt curve according to the main claims; embodiments are subject of the subclaims and the description.

In particular the belt has a belt body, which is in particular a continuous flexible mat. This is in contrast to so-called modular belts, in which the belt is made of a plurality of rigid polymer parts, which are hinged together.

In particular the belt curve, for which the curved conveyor is suitable, comprising:
- a supporting frame,
- a conveyor belt, which is arranged circumferentially on the support frame and adapted to carry the object;
- at least one deflection roller located at each of the first end and the second end, the conveyor belt is deflected around the deflection roller;
- a drive motor adapted to provide a drive power for the conveyor belt;
- a guiding, in particular a guide rail, adapted to guide the conveyor belt in the conveying direction, thereby providing a guiding force in the radial outward direction.

The belt comprises a plurality of receptables within the belt body; the receptables are adapted to be engaged by a drive sprocket. In particular the drive sprocket in in drive connection with the drive motor.

Engaging the belt directly in a positive manner, makes the drive chain of the conventional belt curve obsolete. By omitting the drive chain, a main sources of noise is switched off.

The belt curve is in particular adapted and/or is used to convey articles of the soft pack type. A soft pack type has a surrounding made of foil with a non-rigid shape.

An example embodiment of the invention is described with respect to the figures; herein show
- fig. 1: an inventive belt curve in perspective view;
- fig. 2: a more detailed perspective view of a second end of the belt curve of figure 1;
- fig. 3: a exploded view of main components of the belt curve of figure 1;
- fig. 4: a partial exploded view on an upper run of the belt of the belt curve of figure 1;
- fig. 5: detailed perspective, top and frontal views of a reinforcement part of the belt of the belt curve of figure 1;
- fig. 6: detailed perspective, top and frontal views of a combined radial support and reinforcement part of the belt of the belt curve of figure 1;
- fig. 7: a cross section along the rotational axis of the shaft at the second end of the belt curve at of figure 1.

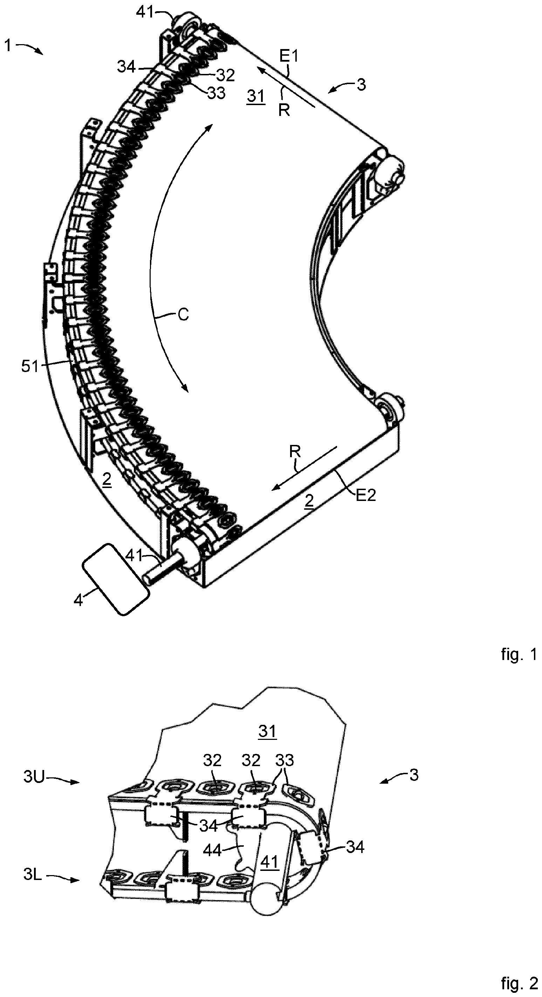

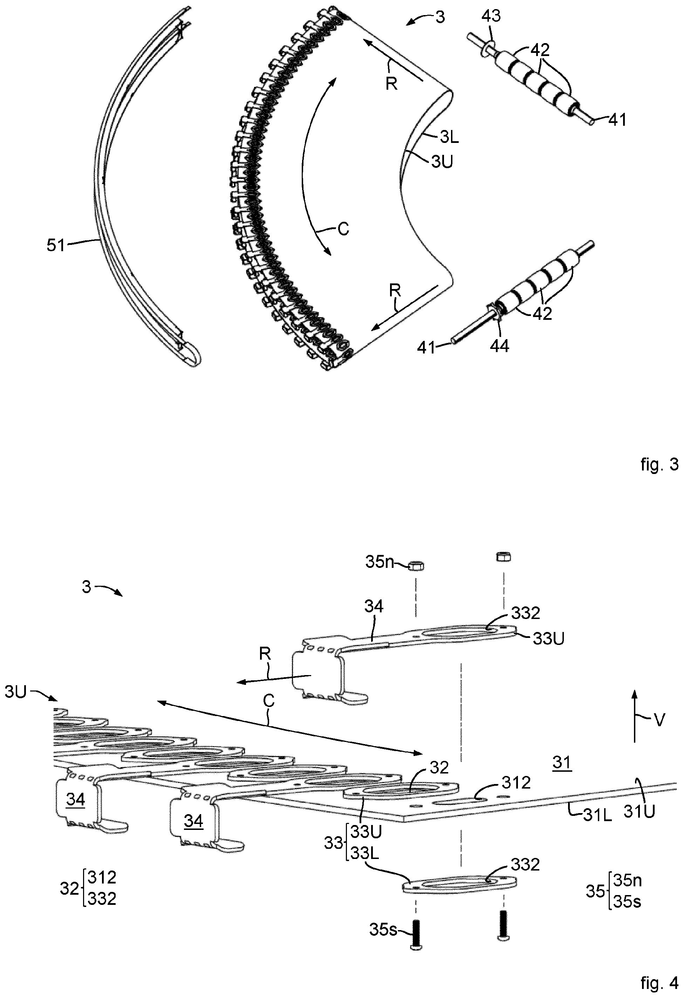

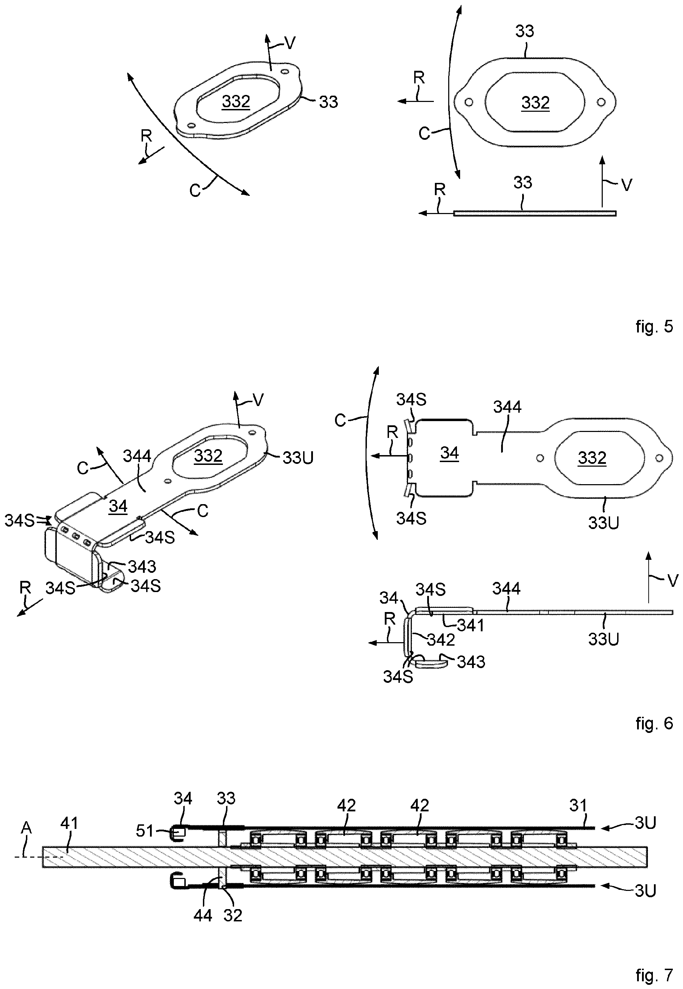

Figures 1 to 7 show a belt curve 1 and corresponding components thereof, which is particular based on the conventional belt curve as mentioned in the introduction. The belt curve 1 is a belt conveyor which is adapted to convey an object between a first end E1 and a second end E2 along a curved conveying direction C. In particular the curved conveying direction encloses an angle of 90°; bus also other angles smaller and different from 90° and/or from 180° are possible.

The belt curve 1 has an endless belt 3 (incl. a mechanical laced belt) having a belt body 31. The belt body is made from a flexible mat, in particular as one piece. The belt body 31 is wound around deflection rollers 42 at the first end E1 and the second end E2. The belt forms an upper run 3U and a lower run 3L.

Here at each end a plurality of deflection rollers 42 are provided which arranged coaxially to each other. The deflection rollers 41 are of cylindrical shape with a same diameter and can rotate independently from each other. The cylindrical shape includes also a slight crowned shape. As an example, the deflection rollers 41 are supported rotatably on a common shaft 41, where the rollers deflection can freely rotate on said shaft 41. Accordingly deflection rollers are not in a drive connection with a drive motor 4. Accordingly each individual deflection roller can rotate at a speed which conforms to the path speed of the conveyor belt, which different for the different radial positions.

The belt curve 1 comprises a support frame 2 adapted to support the components of the belt curve 1. The support frame 2 supports the rollers 42. The support frame 2 is made from multiple parts. The support frame 2 in particular comprises a plurality of belt sliderbeds which provides vertical support for an upper run of the belt 3.

A conventional drive motor 4 provides a drive force to drive the conveyor belt 3. The drive force is transmitted to the conveyor belt via a drive sprocket 44. As an example the drive sprocket 44 is rotatably fixed with the shaft 41 and the shaft 41 is drive connected to the motor.

The drive sprocket 44 is drive connected to the conveyor belt 3 in a positive manner. Contrary to the conventional belt curve, the drive sprocket 44 is in immediate contact with the conveyor belt 3 and thereby engaging into drive receptables 32 of the belt 3. A drive receptable 32 is thereby in particular to be understood as a hole within belt 31. By engaging the receptables 32 a positive drive connection is established between the conveyor belt and the sprocket 44.

The drive receptables 32 of the belt is provided with a reinforcement 33, which is in the present embodiment a grommet 33.

The drive receptable 32 of the belt is formed in main by a drive receptable 312 in the belt body 31. In addition the drive receptable 32 of the belt 3 is also formed by the drive receptable 332 of the reinforcement 33. Thereby the drive receptable 312 in the belt body 31 and the drive receptable 332 in the reinforcement 33 are aligned which each other.

In the present embodiment the grommet 33 fully surrounding the drive receptable 32. In another embodiments covered by the invention, instead of a grommet also another reinforcement 33 may be used, which is not surrounding the receptable 32, e.g. a u-shaped reinforcement or a separate reinforcement parts at a leading and a trailing edge of the receptable 32.

The reinforcement 33 has an upper reinforcement part 33U arranged at an upper surface 31U of the belt body 31 and a lower reinforcement part 33L arranged at a lower surface 31L of the belt body 31. The term upper and lower refers to the relative vertical position of the respective part, when the respective part is on the upper run 3U. The reinforcement 33 is fixed to the belt body, e.g. by a screwed connection 35 (see screws 35s and nuts 35n) enabling a friction fit between the reinforcement 33 and the belt body 31. There are other possibilities to fix the reinforcement to the belt, e.g. by a snap-fit connection, etc-

The drive sprocket 44 engages directly with an edge of the belt body 31 and/or with an edge of the reinforcement 33. In any of both cases, the reinforcement distributes any punctual drive force peaks to different areas of the belt body 31, reducing the risk of damages at the belt body 31 due to high stresses locally.

For keeping the belt body 31 in a desired radial position, a guide rail 51 is provided parallel to the curved conveying direction, the guide rail 51 interacts with radial supports 34 attached to the belt body 31.

In the present embodiment the radial supports 34 are support hooks, which engage a radial outer guide of said guide rail 51 facing in radial outward direction and/or away from the center of the belt body 31.

In the present embodiment the radial supports 34 are made in one piece with a part of the reinforcements 33 (here with the upper reinforcement part 33U), enabling a cost efficient way of producing and assembling these components. In another embodiment the radial supports 34 are made separate to the reinforcements 33.

The radial supports 34 are located on an upper surface of the belt body 31, when located on the upper run 3U. This has the advantage, that the radial supports 34 are not contacting any guiding or driving means located below the level of the belt body in the upper run 3U.

The reinforcement 33 and the radial support 34 are made from a sheet metal, in particular a bended sheet metal. In another embodiment the reinforcement and/or the support can be made from other material such as a polymer material.

The radial support 34 has a vertical guid surface 342 interacting with the guide rail and keeping the belt in the radial direction.

The radial support 34 has a upper vertical guide surface 341, at which the radial support comes to rest.

The radial support 34 has a lower vertical guide surface 343, engaging behind the radial guide, so that the radial support 34 is thus protected against unintentional removal and at which the radial support 34 comes to rest when the respective support is on the lower run 3L.

Viewed in the conveying direction, in front of the guide surfaces 341, 342, 343, are provided with slopes 34S.

Due to the absence of a drive chain, significant noise reductions can be achieved. To support a low noise level, the material within the drive connection can be selected accordingly.

As an example, the reinforcements 33 can be made from a stable material, such as a metal, to enable low wear to the belt 3; the drive sprocket 44 interacting engaging the receptable can be made from a material, which generates low noise when contacting the reinforcement.

As an example the sprocket 44 may have a surface made from plastics. Alternative there may be a provided a soft noise pad attached to the reinforcement, which absorbs the impact of the drive sprocket 44 when hitting the reinforcement.

### List of reference signs

- 1: belt curve
- 2: support frame
- 3: conveyor belt
- 3U: upper run
- 3L: lower run
- 31: belt body
- 31U: upper surface of belt body
- 31L: lower surface of belt body
- 312: drive receptable in belt body
- 32: drive receptable in belt
- 33: reinforcement / grommet surrounding the drive receptable
- 33U: upper reinforcement part
- 33L: lower reinforcement part
- 332: drive receptable in reinforcement
- 34: radial supports of conveyor belt
- 341: upper vertical guide surface
- 342: radial guide surface
- 343: lower vertical guide surface
- 34S: slope
- 344: connector to reinforcement
- 35: screwed connection
- 35s: screw
- 35n: nut
- 4: drive motor
- 41: shaft
- 42: deflection roller (for belt body)
- 43: guide roller (for reinforcement and/or radial support)
- 44: drive shaft
- 51: radial guide rail

- R: radial direction
- C: curved conveying direction
- V: vertical direction ???
- E1: first end
- E2: second end

## Claims

1. Curved conveyor belt (3),
the curved belt is in particular suitable for a belt curve (1), in particular the belt curve is adapted to convey an object along a curved conveying direction (C) in a conveying area (11) between a first end (E1) and a second end (E2), wherein the conveying direction (C) is perpendicular to a radial direction (R);
in particular the belt curve comprising:
- a supporting frame (2);
- a conveyor belt (3), which is arranged circumferentially on the support frame (2) and adapted to carry the object;
- at least one deflection roller (42) located at each of the first end (E1) and the second end (E2), the conveyor belt (3) is deflected around the deflection roller (42);
- a drive (4) adapted to provide a drive power for the conveyor belt (3);
- a guiding guide rail (51), adapted to guide the conveyor belt (3) in the conveying direction (C), thereby providing a guiding force in radial outward direction (R);
**characterized by**
a plurality of receptables (32) within the belt body (31),
the receptables (32) are adapted to be engaged by a drive sprocket (44).

2. Curved conveyor belt (3) according to the preceding claim,
**characterized in**
**that** the receptables (32) are provided with a reinforcement (33).

3. Curved conveyor belt (3) according to the preceding claim,
**characterized in**
**that** the reinforcement (33) at least providing a contact face, for being contacted by the drive sprocket (44) when providing a drive force to the conveyor belt (3).

4. Curved conveyor belt (3) according to claim 2 or 3,
**characterized in**
**that** the reinforcement (33) surrounds the receptable at least partially - when viewed in top view -;
in particular the reinforcement (33) is a grommet fully surrounding the receptable (32) - when viewed in top view - at least in a U-shaped manner.

5. Curved conveyor belt (3) according any of the preceding claims,
**characterized in**
**that** the conveyor belt (3) comprises a radial support (34), attached to the belt body, and adapted to interact with a radial guide rail (51).

6. Curved conveyor belt (3) according to the preceding claim and one of claims 2 to 4,
**characterized in**
**that** the radial support (34) is made in one piece with the reinforcement (33).

7. Curved conveyor belt (3) according any of claims 5 or 6,
**characterized in**
**that** the radial guide (51) is located radially outside of the receptables (32).

8. Curved conveyor belt (3) according any of claims 5 to 7,
**characterized in**
**that** within an upper run (3U) of the belt, the radial support (34) is located on an upper side of the belt body (31).

9. Belt curve (1),
the belt curve is adapted to convey an object along a curved conveying direction (C) in a conveying area (11) between a first end (E1) and a second end (E2), wherein the conveying direction (C) is perpendicular to a radial direction (R);
the belt curve (1) comprising:
- a supporting frame (2);
- a curved conveyor belt (3) according to any of the preceding claims, which is arranged circumferentially on the support frame (2) and adapted to carry the object and
- at least one deflection roller (42) located at each of the first end (E1) and the second end (E2), the conveyor belt (3) is deflected around the deflection roller (42);
- a drive (4) adapted to provide a drive power for the conveyor belt (3);
- a guide rail (51), adapted to guide the conveyor belt (3) in the conveying direction (C), in particular providing a guiding force in radial outward direction (R).

10. Belt curve (1) according to the preceding claim,
**characterized by**
a first plurality of deflection rollers (42) located at each of the first end (E1) and a second plurality of deflection rollers (42) located at each of the first end (E1), wherein the rollers of each of said plurality are of cylindrical shape.

11. Belt curve (1) according to the preceding claim,
**characterized in**
**that** the rollers of each of said plurality are of cylindrical shape are supported in a rotating manner independently from the rotation of other rollers within the same plurality of rollers.

12. Belt curve (1) according to any of claims 9 to 11,
**characterized in**
**that** the a drive (4) has a drive sprocket (44) adapted to engage into receptables (312) of the belt body (31).
